# EUROPÄISCHE PATENTSCHRIFT

(11) **EP 0 918 609 B1**
(45) Veröffentlichungstag und Bekanntmachung des Hinweises auf die Patenterteilung: **23.08.2000**
(21) Anmeldenummer: 97934541.0
(22) Anmeldetag: 25.07.1997
(51) Int. Cl.: B29C 45/10

(54) **SPRITZGIESSMASCHINE ZUR VERARBEITUNG PLASTIFIZIERBARER MASSEN**
INJECTION-MOULDING MACHINE FOR PROCESSING PLASTICIZABLE COMPOUNDS
MACHINE DE MOULAGE PAR INJECTION POUR TRAITER DES MATIERES PLASTIFIABLES

(30) Priorität: 03.08.1996 DE 19631432
(43) Veröffentlichungstag der Anmeldung: 02.06.1999
(73) Patentinhaber: Hehl, Karl, 72290 Lossburg (DE)
(72) Erfinder: Hehl, Karl, 72290 Lossburg (DE)
(74) Vertreter: Reinhardt, Harry
(86) Internationale Anmeldenummer: EP9704042
(87) Internationale Veröffentlichungsnummer: WO9805485

(56) Entgegenhaltungen:
- CH-A- 530 260
- FR-A- 2 099 898
- FR-A- 2 525 526

## Beschreibung

Die Erfindung betrifft eine Spritzgießmaschine zur Verarbeitung plastifizierbarer Massen wie z.B. von Kunststoffen, pulverförmigen Massen oder keramischen Massen nach dem Oberbegriff des Anspruches 1.

Eine derartige Spritzgießmaschine ist z.B. aus der dem Oberbegriff des Anspruchs 1 zugrundeliegenden DE-A 20 20 336 oder aus aus DE-C 32 14 728 bekannt, um mittels einer Spritzgießeinheit nicht nur über eine an der Form vorgesehene Einspritzöffnung in den Formhohlraum der Spritzgießform einspritzen zu können, sondern um bedarfsweise auch in die Trennebene einzuspritzen. Ein Verschwenken der Formschließeinheit in eine vertikale Stellung ist aber auch bei der Arbeit mit Einlegeteilen von Vorteil. Gleichzeitig werden hierdurch die grundsätzlichen Voraussetzungen dafür geschaffen, über die zentrale Angußöffnung als auch in die Trennebene mittels zwei Spritzgießeinheiten einzuspritzen. Zu diesem Zweck ist es erforderlich, die Formschließeinheit aus der horizontalen Stellung, in der die Schließachse der Formschließeinheit mit der Spritzachse der Spritzgießeinheit zusammenfällt, in eine Senkrechtstellung zu verschwenken, um den Zugang zur Trennebene zu ermöglichen. Da die Schwenkachse der gesamten auf einem Umschwenkrahmen angeordneten Formschließeinheit jedoch nicht bis in die Höhe der Spritzachse gelegt werden kann, ist es erforderlich, die Spritzgießeinheit über einen ersten motorischen oder manuellen Antrieb zu verschwenken und anschließend mittels einer zweiten Einheit in Form eines Schneckengetriebes die Trennebene in eine Höhe zu verschieben, in der die Spritzgießeinheit einspritzen kann. Abgesehen von dem hierfür erforderlichen Aufwand hat dies zur Konsequenz, daß keine Endlagensicherheit vorliegt, da insbesondere beim Zurückschwenken in die horizontale Stellung erst die optimale Schwenkstellung eingestellt werden muß, so daß es zu einem mehrfachen Betätigen der verschiedenen Antriebe kommt.

Man ging bisher davon aus, daß ein Verschwenken als auch ein zuverlässiges Verschieben mit derselben Antriebseinheit nicht möglich ist. Grundsätzlich wäre es für ein optimales Verschwenken möglichst ohne Verschiebung erforderlich, die Schwenkachse in die Höhe der Schließachse zu legen. Diesen Verschiebungen der Schwenkachse sind jedoch durch den Formaufspannraum Grenzen gesetzt, da ansonsten eine Überführung des Werkzeugs in den Formaufspannraum behindert wird. Im Stande der Technik wurden die Schwenkachsen daher so tief wie möglich angeordnet. Andererseits sollte der Raum unterhalb des Formaufspannraums für die Entsorgung der Spritzteile und Angüsse freigehalten werden, so daß auch dieser Raum nicht mit einer Antriebseinheit belegt wurde. Angesichts dessen wurde versucht, die Rotation um einen Drehpunkt vorzunehmen, der möglichst außerhalb einer Projektion des Formaufspannraums liegt, und den Verschiebemechanismus allenfalls seitlich vom Formspannraum platzsparend anzuordnen.

Ausgehend von diesem Stand der Technik liegt der vorliegenden Erfindung die Aufgabe zugrunde, eine Spritzgießmaschine der eingangs genannten Gattung derart weiterzubilden, daß ein Verschwenken in die verschiedenen Stellungen der Formschließeinheit kostengünstig mit möglichst wenig Antriebseinrichtungen ermöglicht wird.

Diese Aufgabe wird durch eine Spritzgießmaschine mit'den Merkmalen des Anspruches 1 gelöst.

Zum Verschwenken ist jetzt grundsätzlich nur noch ein einziger Antrieb erforderlich, da das Verschwenken und das gegebenenfalls erforderliche Verschieben von ein und derselben Antriebseinheit ausgeführt wird. Hierzu ist die Antriebseinheit gelenkig angeordnet, wobei sich durch das Abstandsverhältnis zwischen der Schwenkachse und dem Anlenkungspunkt der Antriebseinheit der gewünschte Effekt ergibt, sämtliche erforderlichen Bewegungen mit nur einer Einheit durchzuführen. Durch ein Verschieben der Antriebseinheit in einen Bereich, der im Stand der Technik als ungeeignet erschien, wird es nun möglich, die Wirkachse der Antriebseinheit so anzuordnen, daß sie gleichzeitig das Verschwenken bewerkstelligen kann und bei verschwenkter baulicher Einheit auch in der Lage ist, die Kräfte aufzubringen, um die bauliche Einheit zu verschieben.

Zweckmäßige Weiterbildungen der Erfindung ergeben sich aus den Unteransprüchen.

### Kurze Beschreibung der Zeichnungen

- Fig. 1: Eine formschließseitige Seitenansicht der Spritzgießmaschine mit der Formschließeinheit in horizontaler Stellung,
- Fig. 2: einen Schnitt nach Linie 2-2 von Fig. 1,
- Fig. 3: eine Ansicht gemäß Fig. 1 mit einer im Verschwenken begriffenen Formschließeinheit,
- Fig. 4: eine Ansicht gemäß Fig. 1, wobei die Formschließeinheit in die vertikale Stellung überführt ist,
- Fig. 5: eine Ansicht gemäß Fig. 1 mit einer vertikal stehenden Formschließeinheit, bei der die Trennebene auf die Höhe der Spritzgießeinheit eingestellt ist.

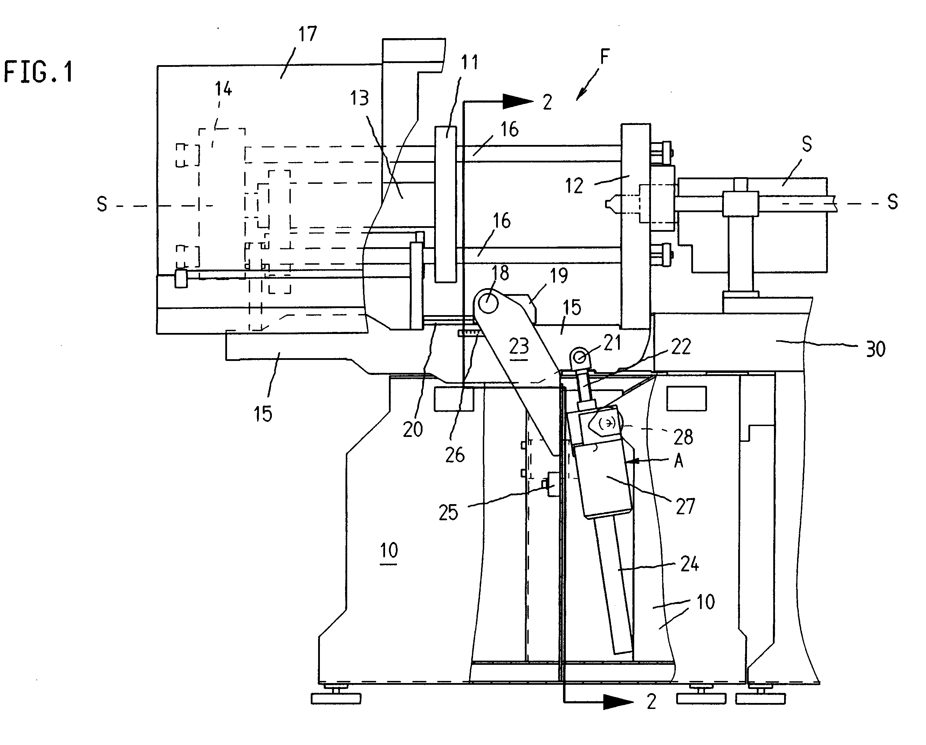

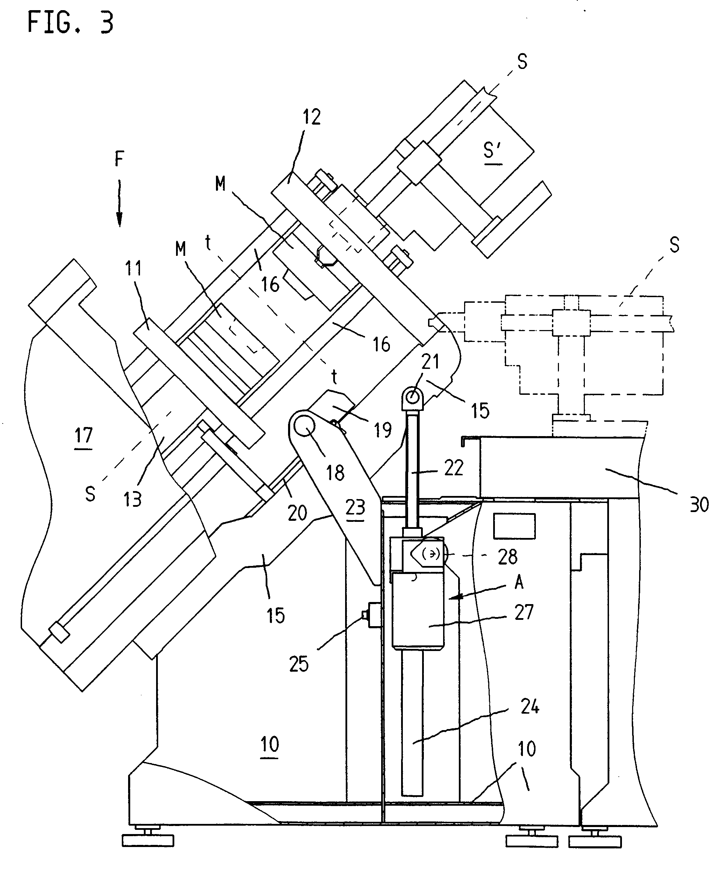

Fig. 1 zeigt einen Ausschnitt aus einer Spritzgießmaschine, insbesondere einer Kunststoff-Spritzgießmaschine, die zur Verarbeitung plastifizierbarer Massen wie z.B. von Kunststoffen, pulverförmigen Massen oder keramischen Massen vorgesehen ist. Rechts oben ist insofern der Plastifizierzylinder der Spritzgießeinheit S angedeutet, der durch den stationären Formträger der Formschließeinheit durchtritt. Die Spritzgießeinheit S als auch die Formschließeinheit F sind auf einem Maschinenfuß 10 angeordnet. Die Formschließeinheit nimmt zwischen einem beweglichen Formträger 11 und einem stationären Formträger 12 eine Gießform M (Fig. 3) auf. Die Bewegung des beweglichen Formträgers 11 erfolgt über eine Schließeinrichtung 13, die z.B. hydraulisch oder elektromechanisch arbeitet. Die Schließeinrichtung bewegt den beweglichen Formträger 11 der Formschließeinheit F entlang einer Schließachse s-s auf den stationären Formträger 12 zu und von diesem weg.

Um das Verschwenken der Formschließeinheit zu ermöglichen, ist diese auf Tragelementen 15 angeordnet, die zumindest den beweglichen Formträger 11, den stationären Formträger 12 und die Schließeinrichtung 13 der Formschließeinheit F zu einer baulichen Einheit zusammenfassen. Die Schließeinrichtung 13 stützt sich an einem Abstützelement 14 ab, das über Holme 16 mit dem stationären Formträger 12 verbunden ist. Statt dieser Holme können auch anders geformte Kraftübertragungselemente vorgesehen werden, die zum Beispiel einen freien Zugang zum Formspannraum ermöglichen und insofern um diesen herumgeführt sind.

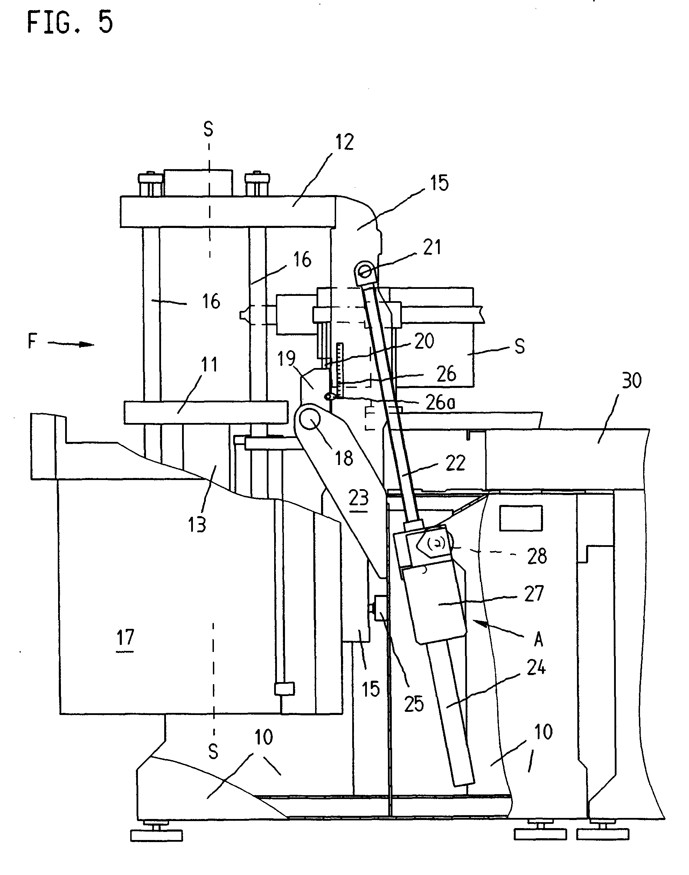

Die bauliche Einheit ist am Maschinenfuß 10 abgestützt. Um eine quer zur Schließachse s-s verlaufenden Schwenkachse ist die bauliche Einheit um wenigstens 90° gegenüber dem Maschinenfuß 10, vorzugsweise aus einer horizontalen Stellung gemäß Fig. 1 in eine vertikale Stellung gemäß Fig. 5 verschwenkbar. Um bedarfsweise ein Verschieben der baulichen Einheit parallel zur Schließachse s-s zu ermöglichen, sind Führungen 20 vorgesehen. Dies ist insbesondere erforderlich, um bei einem Einspritzen in die Trennebene die Trennebene in eine Höhe zu bringen, in der die Spritzachse der Spritzgießeinheit S liegt. Um das Umsetzen der Formschließeinheit zu bewerkstelligen, sind insofern Mittel zum Verschwenken der baulichen Einheit um die Schwenkachse 18 sowie Mittel zum Verschieben der baulichen Einheit entlang den Führungen 20 vorgesehen. Als Mittel zum Verschwenken und zum bedarfsweisen Verschieben der bau-lichen Einheit ist eine Antriebseinheit A vorgesehen, die gelenkig mit dem Maschinenfuß 10 und an einem Anlenkungspunkt 21 mit der baulichen Einheit verbunden ist. Der Anlenkungspunkt 21 ist dabei von der Schwenkachse 18 beabstandet.

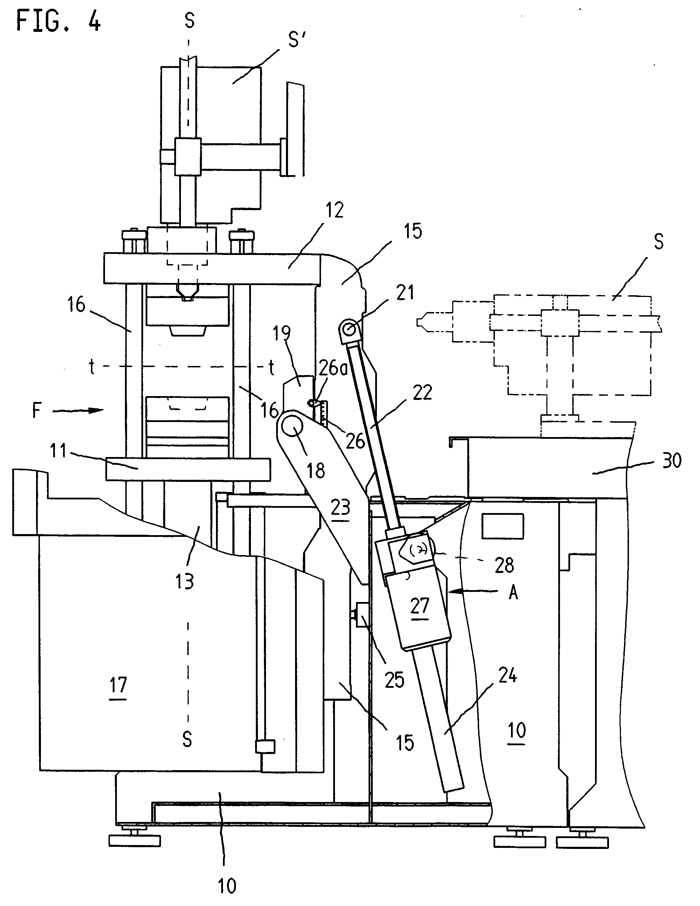

Als vorteilhaft hat sich herausgestellt, daß der Anlenkungspunkt 21 oberhalb einer Linie liegt, die durch die Schwenkachse 18 und den Schwenkpunkt 28 der Antriebseinheit A gelegt ist. Um nun zunächst das Schwenken der baulichen Einheit zu bewerkstelligen und anschließend mit derselben Antriebseinheit A das Verschieben, liegt die Wirkrichtung des als Antriebseinheit A ausgebildeten Linearantriebs bei horizontal angeordneter baulicher Einheit nahezu im rechten Winkel zu den Führungen 20. Das Linearbewegungsmittel 22 der Antriebseinheit greift am Tragelement 15 der baulichen Einheit an. Bei Überführung der baulichen Einheit aus der horizontalen Stellung gemäß Fig. 1 wird die bauliche Einheit zunächst in eine vertikale Stellung gemäß Fig. 4 verschwenkt und dann in den Führungen 20 nach oben verschoben. Die Schwenkachse 18 liegt bei horizontaler Stellung der baulichen Einheit oberhalb des Anlenkungspunktes 21 an einem am Maschinenfuß 10 abgestützten Stützarm 23. Andererseits ist die Schwenkachse mit einem Lagerbock 19 verbunden, der in die Führung 20 eingreift und somit mit den Tragelementen 15 verbunden ist. Fig. 1 verdeutlicht, daß die Schwenkachse 18 bei horizontaler Stellung der baulichen Einheit vom stationären Formträger 12 weiter beabstandet ist als der Anlenkungspunkt 21. Die Anordnung der Schwenkachse 18, des Schwenkpunktes 28 und des Anlenkungspunktes 21 ist so gewählt, daß sich der gewünschte Bewegungsablauf Schwenken-Verschieben ergibt. Diese Anordnung ist so optimiert, daß der Zugang zum Formspannraum nicht beeinträchtigt ist.

Die Antriebseinheit A und die Schwenkachse 18 liegen bei horizontal liegender Formschließeinheit im Bereich der vertikalen Projektion des Formspannraums zwischen beweglichem Formträger 11 und stationärem Formträger 12. Ebenso liegen die Schwenkachse 18 und der Anlenkungspunkt 21 sowohl bei horizontal liegender als auch bei vertikal stehender Formschließeinheit F jeweils im Bereich einer Projektion des Formspannraums begrenzt durch die Formträger in ihrer jeweils geöffneten Stellung. Es handelt sich bei horizontal liegender Formschließeinheit um eine Vertikalprojektion und bei vertikal stehender Formschließeinheit um eine Horizontalprojektion. Durch die Anordnung der Achsen in diesem Bereich, der zwar in den Formspannraum hineinragt, jedoch eine Zuführung der Form M nicht behindert, wird das Verschwenken und bedarfsweise Verschieben erleichtert.

Wird die Antriebseinheit A ausgehend von einer Stellung gemäß Fig. 1 betätigt, so führt die Betätigung der Antriebseinheit dazu, daß die bauliche Einheit zunächst in eine Stellung gemäß Fig. 3 verschwenkt wird. Bei weiterer Betätigung bewegt sich der Anlenkungspunkt ebenfalls in Fig. 3 nach links, so daß sich eine Stellung gemäß Fig. 4 ergibt. In dieser Stellung liegt die Formschließeinheit mit dem Lagerbock am Endanschlag in der Nähe der Schwenkachse 18 auf. Fig. 4 verdeutlicht dabei insbesondere im Vergleich mit Fig. 5, daß in dieser Stellung ein Einspritzen aus der Spritzgießeinheit S unter Umständen, die im wesentlichen durch die Formmaße bestimmt werden noch nicht möglich ist. Hierzu muß nämlich die Formschließeinheit noch nach oben verschoben werden, was ebenfalls mit der gleichen Antriebseinheit erfolgt. Die Schwenkbewegung selbst ist beendet, sobald das Tragelement 15 an der Anlage 25 anliegt. Bei weiterer Betätigung der Antriebseinheit A kann sich dann nur noch eine Verschiebung der Formschließeinheit nach oben zur Trennhöheneinstellung der Trennebene ergeben. Bei der Rückführung in die horizontale Stellung führt dies aber dazu, daß zunächst die Verschiebebewegung allein aufgrund der Schwerkraft ebenfalls so lange erfolgt, bis der Lagerbock 19 an einem Endanschlag in der Nähe der Schwenkachse 18 anliegt, so daß im folgenden nur noch ein Kippen eingeleitet wird, das von selbst dann zur optimalen Stellung der Formschließeinheit für ein horizontales Einspritzen führt.

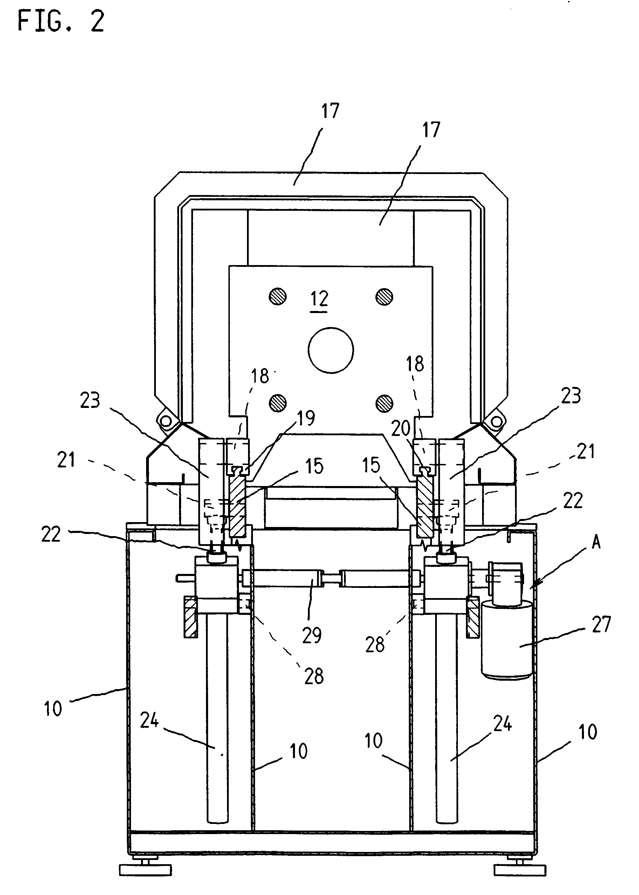

Im Ausführungsbeispiel ist als Antriebseinheit ein elektromechanischer Spindelantrieb vorgesehen, wobei gemäß Fig. 2 ein Motor 27 über eine Antriebswelle 29 zwei Spindelantriebe synchron antreibt. Anstelle der Antriebswelle 29 kann auch eine elektronische Welle für eine Gleichschaltung der Spindelantriebe sorgen, sofern für jeden Spindelantrieb ein eigener Motor vorgesehen wird. Selbstverständlich kann auch nur ein Motor eingesetzt werden, der dann jedoch vorzugsweise zentral an der Formschließeinheit angreifen sollte. Anstelle des elektromechanischen Antriebs können auch andere Antriebsarten vorgesehen werden. Alternativ kann die Maschine auch in einer vereinfachten Ausführungsform vorgesehen werden, in der der elektromechanische Antrieb durch einen manuellen Antrieb z.B. mittels einer Kurbel ersetzt ist. Insbesondere bei einer derartigen Ausführungsform ist dann die Skala 26 von Vorteil, da über sie konkret das Maß zur Höhenverstellung der Trennebene feststellbar ist. Eine optimale Verschwenkung ergibt sich dann, wenn die Schwenkachse 18 soweit als möglich an die Schließachse s-s in horizontaler Stellung bzw. in vertikaler Stellung an eine durch die Trennebene t-t gelegte Achse herangelegt ist. In diesem Fall kann eventuell auf die Verschiebung verzichtet werden, werden jedoch die entsprechenden Führungen 20 vorgesehen, ist eine genauere Einstellung auf verschiedene Formmaße möglich. Gemäß Fig. 4 kann eine Spritzgießeinheit S' mit dem stationären Formträger 12 verschwenkt werden, während eine zweite Spritzgießeinheit S auf einem Tisch 30 angeordnet ist und nach Einstellung der Trennebene auf diesem Tisch 30 an die Spritzgießform M angelegt werden kann.

Mit der baulichen Einheit und der Formschließeinheit F wird auch eine Schutzabdeckung 17 verschwenkt, wobei Fig. 3 und 4 verdeutlichen, daß die Verschwenkung in eine Ausnehmung des Maschinenfußes 10 erfolgt. Das Linearbewegungsmittel 22, im Ausführungsbeispiel eine Spindel, ist gegen Verschmutzung durch ein Schutzelement 24 geschützt.

## Patentansprüche

1. Spritzgießmaschine zur Verarbeitung plastifizierbarer Massen mit
- einem Maschinenfuß (10),
- einer auf dem Maschinenfuß (10) angeordneten und eine Gießform (M) zwischen einem beweglichen Formträger (11) und einem stationären Formträger (12) aufnehmenden Formschließeinheit (F),
- einer Schließeinrichtung (13) zur Bewegung des beweglichen Formträgers (11) der Formschließeinheit (F) entlang einer Schließachse (s-s) auf den stationären Formträger (12) zu und von diesem weg,
- Tragelementen (15), die zumindest mit dem beweglichen Formträger (11), dem stationären Formträger (12) und der Schließeinrichtung (13) der Formschließeinheit (F) eine am Maschinenfuß (10) abgestützte, bauliche Einheit bilden,
- einer quer zur Schließachse (s-s) verlaufenden Schwenkachse (18), um die die bauliche Einheit um wenigstens 90° gegenüber dem Maschinenfuß (10) verschwenkbar ist,
- Führungen (20) zum Verschieben der baulichen Einheit parallel zur Schließachse (s-s),
- wenigstens einer Spritzgießeinheit (S,S') zum Einspritzen der plastifizierbaren Masse in die Gießform (M),
- wenigstens einer Antriebseinheit (A) zum Verschwenken der baulichen Einheit um die Schwenkachse (18), wobei die Antriebseinheit gelenkig mit dem Maschinenfuß (10) und an einem Anlenkungspunkt (21) mit der baulichen Einheit verbunden ist, welcher Anlenkungspunkt von der Schwenkachse (18) beabstandet ist,
- Mitteln zum Verschieben der baulichen Einheit entlang den Führungen (20) mit wenigstens einem an der baulichen Einheit angelenkten Linearbewegungsmittel (22),
dadurch gekennzeichnet, daß als Mittel zum Verschwenken zugleich das Linearbewegungsmittel (22) der Antriebseinheit (A) zum Verschieben der baulichen Einheit vorgesehen ist, das bei Überführung der baulichen Einheit aus einer horizontalen Stellung, in der die Formschließeinheit (F) die Gießform (M) horizontal schließt, die bauliche Einheit zunächst in eine vertikale Stellung schwenkt und dann in den Führungen (20) verschiebt.

2. Spritzgießmaschine nach Anspruch 1, dadurch gekennzeichnet, daß die Wirkrichtung des als Antriebseinheit (A) ausgebildeten Linearantriebs bei horizontal angeordneter baulicher Einheit nahezu im rechten Winkel zu den Führungen (20) liegt.

3. Spritzgießmaschine nach Anspruch 1, dadurch gekennzeichnet, daß die Schwenkachse (18) bei horizontaler Stellung der baulichen Einheit oberhalb des Anlenkungspunktes (21) an einem am Maschinenfuß (10) abgestützten Stützarm (23) angeordnet ist.

4. Spritzgießmaschine nach Anspruch 1, dadurch gekennzeichnet, daß die Schwenkachse (18) bei horizontaler Stellung der baulichen Einheit vom stationären Formträger (12) weiter beabstandet ist als der Anlenkungspunkt (21).

5. Spritzgießmaschine nach Anspruch 1, dadurch gekennzeichnet, daß die Antriebseinheit (A) bei Betätigung die bauliche Einheit so lange schwenkt, bis sie am Maschinenfuß (10) an einer Anlage (25) anliegt, und daß bei weiterer Betätigung der Antriebseinheit die bauliche Einheit in den Führungen (20) verschiebbar ist.

6. Spritzgießmaschine nach Anspruch 1, dadurch gekennzeichnet, daß am Lagerbock (19) oder an den Tragelementen (15) eine Skala (26) und am anderen dieser zwei Elemente ein Zeiger (26a) vorgesehen sind, durch die die Höhe einer Trennebene (t-t) der Gießform (M) bestimmbar ist, in welcher Höhe die horizontal einspritzende Spritzgießeinheit (S) einspritzt.

7. Spritzgießmaschine nach Anspruch 1, dadurch gekennzeichnet, daß als Antriebseinheit zwei elektromechanische Spindelantriebe vorgesehen sind, die von einem gemeinsamen Motor (27) angetrieben sind.

## Claims

1. Injection moulding machine for processing plasticisable materials, including
- a machine base (10),
- a mould closing unit (F), which is disposed on the machine base (10) and accommodates a moulding mould (M) between a movable mould carrier (11) and a stationary mould carrier (12),
- a closing arrangement (13) for moving the movable mould carrier (11) of the mould closing unit (F) along a closing axis (s-s) towards the stationary mould carrier (12) and away from said stationary mould carrier,
- support elements (15), which form a structural unit, supported on the machine base (10), at least with the movable mould carrier (11), the stationary mould carrier (12) and the closing arrangement (13) of the mould closing unit (F),
- a pivotal axis (18), which extends transversely relative to the closing axis (s-s), and about which the structural unit is pivotable through at least 90° relative to the machine base (10),
- guides (20) for displacing the structural unit parallel to the closing axis (s-s),
- at least one injection moulding unit (S,S') for injecting the plasticisable material into the moulding mould (M),
- at least one drive unit (A) for pivoting the structural unit about the pivotal axis (18), the drive unit being pivotally connected to the machine base (10) and at an articulation point (21) to the structural unit, which articulation point is disposed at a spacing from the pivotal axis (18), and
- means for displacing the structural unit along the guides (20) with at least one linear moving means (22), which is pivotally mounted on the structural unit,
characterised in that the linear moving means (22) of the drive unit (A) for displacing the structural unit is also provided as the means for the pivotal movement, and said means pivots the structural unit initially into a vertical position and then displaces such in the guides (20) for transferring the structural unit from a horizontal position where the mould closing unit (F) closes the moulding mould (M) horizontally.

2. Injection moulding machine according to claim 1, characterised in that the operational direction of the linear drive, configured as drive unit (A), extends virtually at right angles to the guides (20) when the structural unit is horizontally disposed.

3. Injection moulding machine according to claim 1, characterised in that the pivotal axis (18) is disposed on a supporting arm (23), supported on the machine base (10), when the structural unit is in a horizontal position above the articulation point (21).

4. Injection moulding machine according to claim 1, characterised in that, when the structural unit is in the horizontal position, the pivotal axis (18) is disposed at a greater spacing from the stationary mould carrier (12) than the articulation point (21).

5. Injection moulding machine according to claim 1, characterised in that the drive unit (A), upon actuation, pivots the structural unit for such a time until it abuts against an abutment (25) on the machine base (10), and in that, upon further actuation of the drive unit, the structural unit is displaceable in the guides (20).

6. Injection moulding machine according to claim 1, characterised in that a scale (26) is provided on the bearing block (19) or on the support elements (15), and an indicator (26a) is provided on the other of these two elements, the level of a parting plane (t-t) of the moulding mould (M) being determinable by said two elements, and the horizontally injecting injection moulding unit (S) injecting in said plane.

7. Injection moulding machine according to claim 1, characterised in that two electromechanical spindle drives are provided as the drive unit and are driven by a common motor (27).

## Revendications

1. Machine de moulage par injection pour le traitement de matières plastifiables comportant :
- un pied de machine (10),
- une unité de fermeture de moule (F) disposée sur le pied de machine (10) et recevant un moule de coulée (M) entre un support de moule (11) mobile et un support de moule (12) stationnaire,
- un dispositif de fermeture (13) pour le déplacement du support de moule (11) mobile de l'unité de fermeture de moule (F) le long d'un axe de fermeture (s-s) vers le porte-moule (12) stationnaire et à partir de celui-ci,
- des éléments porteurs (15) qui, au moins avec le porte-moule (11) mobile, le porte-moule (12) stationnaire et le dispositif de fermeture (13) de l'unité de fermeture de moule (F), forment une unité de construction soutenue sur le pied de machine (10),
- un axe de pivotement (18) qui s'étend transversalement à l'axe de fermeture (s-s) et autour duquel l'unité de construction peut pivoter d'au moins 90° par rapport au pied de machine (10),
- des organes de guidage (20) pour la translation de l'unité de construction parallèlement à l'axe de fermeture (s-s),
- au moins une unité de moulage par injection (S,S') pour l'injection de la matière plastifiable dans le moule de coulée (M),
- au moins une unité d'entraînement (A) pour le pivotement de l'unité de construction autour de l'axe de pivotement (18), l'unité d'entraînement étant reliée de manière articulée au pied de machine (10) et, en un point d'articulation (21), à l'unité de construction, lequel point d'articulation étant espacé de l'axe de pivotement (18),
- des moyens de translation de l'unité de construction le long des organes de guidage (20) avec au moins un moyen de déplacement linéaire (22) articulé à l'unité de construction,
caractérisée en ce que comme moyens de pivotement, il est prévu en même temps le moyen de déplacement linéaire (22) de l'unité d'entraînement (A) pour la translation de l'unité de construction, lequel, au moment où l'unité de construction quitte une position horizontale dans laquelle l'unité de fermeture de moule (F) ferme horizontalement le moule de coulée (M), fait pivoter d'abord l'unité de construction dans une position verticale puis la fait coulisser dans les organes de guidage (20).

2. Machine de moulage par injection selon la revendication 1, caractérisée en ce que la direction d'action du dispositif d'entraînement linéaire, réalisé en tant qu'unité d'entraînement (A), se situe à peu près à angle droit par rapport aux organes de guidage (20), lorsque l'unité de construction est disposée horizontalement.

3. Machine de moulage par injection selon la revendication 1, caractérisée en ce que l'axe de pivotement (18) est disposé sur un bras d'appui (23), soutenu sur le pied de machine (10), en position horizontale de l'unité de construction au-dessus du point d'articulation (21).

4. Machine de moulage par injection selon la revendication 1, caractérisée en ce que l'axe de pivotement (18) est plus éloigné du porte-moule (12) stationnaire que le point d'articulation (21), en position horizontale de l'unité de construction.

5. Machine de moulage par injection selon la revendication 1, caractérisée en ce que lorsqu'elle est actionnée, l'unité d'entraînement (A) fait pivoter l'unité de construction jusqu'à ce qu'elle s'applique contre une butée (25) du pied de machine (10), et en ce que l'unité de construction peut être déplacée dans les organes de guidage (20), lorsque l'unité d'entraînement continue d'être actionnée.

6. Machine de moulage par injection selon la revendication 1, caractérisée en ce qu'il est prévu sur le support de palier (19) ou sur les éléments porteurs (15), une échelle (26) et sur l'autre de ces deux éléments, un curseur (26a) qui permet de déterminer la hauteur d'un plan de séparation (t-t) du moule de coulée (M), hauteur à laquelle l'unité de moulage par injection (S), injectant horizontalement, procède à l'injection.

7. Machine de moulage par injection selon la revendication 1, caractérisée en ce qu'il est prévu comme unité d'entraînement deux dispositifs électromécaniques d'entraînement à broche, qui sont entraînés par un moteur (27) commun.
